# EUROPÄISCHE PATENTSCHRIFT

(11) **EP 3 049 739 B1**
(45) Veröffentlichungstag und Bekanntmachung des Hinweises auf die Patenterteilung: **17.07.2019**
(21) Anmeldenummer: 14795662.7
(22) Anmeldetag: 26.09.2014
(51) Int. Cl.: F25D 23/06, E04B 1/80, F16L 59/065

(54) **FOLIENUMHÜLLTER VAKUUMDÄMMKÖRPER**
FOIL-WRAPPED VACUUM INSULATION ELEMENT
CORPS D'ISOLATION SOUS VIDE ENTOURÉ D'UNE FEUILLE

(30) Priorität: 26.09.2013 DE 102013016005
(43) Veröffentlichungstag der Anmeldung: 03.08.2016
(73) Patentinhaber: va-Q-tec AG, 97080 Würzburg (DE)
(72) Erfinder: CAPS, Roland, 63839 Kleinwallstadt (DE)
(74) Vertreter: Küchler, Stefan
(86) Internationale Anmeldenummer: PCT/IB2014/001927
(87) Internationale Veröffentlichungsnummer: WO 2015/044756

(56) Entgegenhaltungen:
- DE-A1- 10 058 566
- DE-A1-102011 122 211
- FR-A3- 2 589 447
- JP-A- H06 159 915
- JP-A- H11 201 376
- US-A- 4 662 521

## Beschreibung

Die Erfindung richtet sich auf einen folienumhüllten Vakuumdämmkörper mit einem Kern und einer den Kern umgebenden Hülle.

Häufig weisen derartige Vakuumdämmkörper eine platten- oder paneelförmige Gestalt auf und dienen zur thermischen Isolation, beispielsweise an Gebäuden, Kühl- oder Gefriergeräten, Warmhalteboxen, etc.

Ihre Funktionsweise basiert darauf, dass innerhalb des die Hülle stützenden Kernmaterials offene, d.h. miteinander kommunizierende Poren vorhanden sind, welche während der Herstellung evakuiert werden. Daher kann innerhalb dieser Poren die Wärme weder durch Wärmeleitung noch durch Wärmekonvektion transportiert werden - das Ergebnis ist ein extrem guter Wärmedämmwert, so dass derartige Vakuumisolationspaneele bei gleichen Wärmedämmungseigenschaften wie konventionellen Dämmplatten nur etwa ein Zehntel von deren Dicke aufweisen. JP H06 159915 A offenbart ein Folienumhüllter Vakuumdämmkörper gemäß dem Oberbegriffs des Anspruchs 1. US 4662521A, DE10058566A1 und FR2589447A3 offenbaren ähnlichen Folienumhüllter Vakuumdämmkörpers.

Ein Problem bei der Herstellung derartiger Vakuumdämmkörper ist jedoch, dass beim Evakuieren Partikel aus dem Kern losgerissen werden können und sodann entweder die Bereiche der späteren Siegelnähte verunreinigen und eine effiziente, d.h. druckdichte Versiegelung erschweren oder gar unmöglich machen, oder in die Evakuierungspumpe gelangen und diese beschädigen oder gar zerstören können.

Um dies zu verhindern, ist bereits vorgeschlagen worden, den Kern in ein Vlies einzuhüllen, welches mitgerissene Partikel des Kerns zurückhalten soll. Es hat sich jedoch als relativ aufwändig erwiesen, vorgeformte Kerne vollständig in ein solches Vlies einzuwickeln; pulverförmiges Kernmaterial lässt sich in solch eine Vliesbahn ohnehin nicht einfüllen.

Aus den Nachteilen des beschriebenen Standes der Technik resultiert das die Erfindung initiierende Problem, einen gattungsgemäßen, folienumhüllten Vakuumdämmkörper derart weiterzubilden, dass die Herstellung einfach und möglichst maschinell erfolgen kann und beim Evakuieren die Partikel aus dem Kern zuverlässig zurückgehalten werden.

Die Lösung dieses Problems gelingt bei einem gattungsgemäßen, folienumhüllten Vakuumdämmkörper gemäß Anspruch 1. Falls im Folgenden die Begriffe Papier, Karton und Pappe voneinander unterschieden werden, so soll dies entsprechend dem üblichen Sprachgebrauch verstanden werden, wonach Papier eine Grammatur, d.h. ein Flächengewicht von weniger als 150 g/qm aufweist, Karton eine Grammatur von 150 g/qm bis 600 g/qm, und Pappe eine Grammatur von mehr als 600 g/qm. Wird dagegen keine Unterscheidung anhand der Grammatur getroffen, so kann der Begriff Papier auch Karton und Pappe umfassen.

Insbesondere soll dies für Materialeigenschaften dieser Substanzen gelten, welche für Papier, Karton und Pappe gleichermaßen gelten. Hierzu zählen die fogenden Eigenschaften:
Die wesentlichen Grundbestandteile von Papier-, Karton- und Pappe-Materialien sind Faserstoffe, insbesondere Holzschliff, Halbzellstoffe, Zellstoffe und/oder Altpapier. In geringeren Mengen können auch Substanzen zur Verbesserung mechanischer Eigenschaften enthalten sein, insbesondere zur Leimung und Impragnierung, wie beispielsweise tierische Leime, Harze, Paraffine, Wachse. Dagegen sind häufig anzutreffende Füllstoffe wie Talkum, Kaolin, Gips, Bariumsulfat, Kreide, Titanweiß optional und daher im Rahmen der vorliegenden Erfindung entbehrlich. Aus verfahrenstechnischen Gründen sind oft weitere Hilfsmittel vorhanden wie Entschaumer, Dispergiermittel, etc.

Die dabei verwendeten Faserstoffe - sei es Holzschliff, Halbzellstoffe, Zellstoffe und/oder Altpapier - enthalten Zellulose. Hierbei handelt es sich um ein Polysaccharid, etwa mit der chemischen Summenformel (C₆H₁₀O₅)ₙ. Denn diese Substanz bildet den Hauptbestandteil der Zellwände von Pflanzen und Hölzern.

Die Zellulose ist ein Polymer aus kettenförmigen Makromolekülen, aufgebaut aus aneinandergereihten Monomeren in Form von Glukosemolekülen C₆H₁₂O₆. Aus mehreren Bündeln solcher kettenförmiger Makromoleküle bestehen sogenannten Mizellen, und mehrere Mizellen bilden wiederum sogenannte Fibrillen, die Grundbestandteile der Zellulosefasern.

In den oben erwähten Bündeln gibt es kristalline Bereiche mit einer regelmäßigen Molekülanordnung und amorphe Bereiche mit einer unregelmäßigen Molekülanordnung. Aus dem Zusammenwirken dieser unterschiedlichen Bereiche resultieren die typischen Eigenschaften von Papier, Karton und Pappe, wobei die kristallinen Bereiche die Festigkeit und Steifheit liefern, während die amorphen Bereiche der betreffenden Substanz Flexibilität und Elastizität verleihen.

Im Rahmen der Erfindung sind zwar alle zellulosehaltigen Stoffe grundsätzlich zur Papierherstellung geeignet. Da diese jedoch im Allgemeinen keine besonderen Anforderungen erfüllen müssen, eignet sich hierfür besonders die Verwendung von Altpapier, Hadern, Lumpen od. dgl. Recyclingmaterial. Da Altpapier allerdings bereits einmal zu Papier verarbeitet wurde, sind die dortigen Fasern durch die vormalige und erneute Bearbeitung, insbesondere im Rahmen des Mahlschrittes, geschädigt, so dass neben recycelten Fasern zumindest weitere Zusatzstoffe vorgesehen werden sollten. Dieser Anteil kann im Rahmen der Erfindung jedoch vergleichsweise gering gehalten werden, beispielsweise gleich oder kleiner als 30 Gew.-%, vorzugsweise gleich oder kleiner als 20 Gew.-%, insbesondere gleich oder kleiner als 10 Gew.-%.

Aufgrund dieser überwiegenden Verwendung teilweise mehrmalig recycelter Materialien ist Papier einerseits preiswerter als ein Vlies aus einem textilen Material, gleichzeitig dünner und leichter und außerdem dichter und eignet sich daher für den vorliegenden Zweck besser als bekannte Vliesstoffe oder steht diesen jedenfalls in nichts nach.

Eine einzelne Papierlage kann eine Grammatur von 40 g/qm oder mehr aufweisen, beispielsweise eine Grammatur von 50 g/qm oder mehr, vorzugsweise eine Grammatur von 60 g/qm oder mehr, insbesondere eine Grammatur von 80 g/qm oder mehr, oder sogar eine Grammatur von 100 g/qm oder mehr. Andererseits kann eine einzelne Papierlage eine Grammatur von 250 g/qm oder weniger aufweisen, beispielsweise ein Grammatur von 225 g/qm oder weniger, vorzugsweise ein Grammatur von 200 g/qm oder weniger, insbesondere ein Grammatur von 175 g/qm oder weniger, oder sogar eine Grammatur von 150 g/qm oder weniger. Der bevorzugte Bereich des Flächengewichts garantiert einerseits eine hohe Reißfestigkeit, begrenzt jedoch andererseits das damit in das Vakuumisolationspaneel zusätzlich eingebrachte Gewicht und erhöht schließlich die Stärke des fertigen Isolationspaneels nicht erheblich; außerdem lässt sich Papier dieser Stärke noch gut falten und kann also an den Kanten des Kerns vordefinierte Faltkanten aufweisen, um die Ausbildung von geraden Kanten des fertigen Vakuumisolationspaneels zu unterstützen.

Es hat sich als günstig erwiesen, dass mehrere Lagen aus Papier vorgesehen sind, vorzugsweise drei. Dadurch kann die Festigkeit des Materials, insbesondere dessen Reißfestigkeit, deutlich gesteigert werden, wodurch der Herstellungsprozess sich weniger sensibel gestaltet.

Die Erfindung empfiehlt, dass wenigstens eine Papier- oder Kartonlage mit einer oder zwei benachbarten Papier- oder Kartonlagen zu einer einzigen Schicht verbunden ist, vorzugsweise verklebt. Miteinander verklebte Lagen aus Papier oder Karton haben eine höhere Steifigkeit als die gleiche Anzahl nicht verklebter Lagen, weil sich die verklebten Lagen beim Biegen nicht gegeneinander verschieben können.

Die Biegefestigkeit lässt sich weiter dadurch steigern, dass wenigstens eine von mehreren Papier- oder Kartonlagen, vorzugsweise eine innere Papier- oder Kartonlage, einem gewellten Verlauf folgt. Eine solche gewellte Lage ermöglicht es, den Abstand zwischen den beiden anschließenden Lagen zu vergrößern. Demzufolge ergibt sich die Wirkung eines Oberzugs und eines davon beabstandeten Unterzugs, was die Festigkeit und Stabilität beträchtlich erhöht. Das Ergebnis ist im Allgemeinen eine Pappe, wie sie auch bei größeren Verpackungs- oder Umzugskartons anzutreffen ist.

Bevorzugt sind insgesamt drei Papierlagen vorgesehen, vorzugsweise mit einer Grammatur von jeweils 40 g/qm oder mehr, und/oder mit einer bevorzugten Grammatur von jeweils 250 g/qm oder weniger, so dass die gesamte Schicht aus miteinander verbundenen Lagen von Papier oder Karton insgesamt eine Grammatur zwischen 120 g/qm und 750 g/qm aufweist, vorzugsweise eine Grammatur zwischen 150 g/qm und 600 g/qm, insbesondere eine eine Grammatur zwischen 170 g/qm und 500 g/qm. Damit ist ein optimaler Kompromiss gefunden aus maximaler Reißfestigkeit einerseits und optimaler Faltbarkeit andererseits.

Es liegt im Rahmen der Erfindung, dass das Papier zu 40 Gew.-% oder mehr aus Altpapier besteht, vorzugsweise zu 60 Gew.-% oder mehr aus Altpapier besteht, insbesondere zu 80 Gew.-% oder mehr aus Altpapier besteht. Es handelt sich um eine Methode, um die erfindungsgemäßen Vakuumisolationspaneele auf eine möglichst umweltfreundliche Weise herzustellen.

Die Lage oder Schicht aus Papier, Karton und/oder Pappe lässt sich zu einem offenen und/oder verschließbaren Hohlkörper formen, welcher etwa die selbe Gestalt aufweist wie der fertige Vakuumdämmkörper. Dadurch besteht die Möglichkeit, ein formloses Kernmaterial wie beispielsweise ein Pulver oder Granulat zu verwenden, das in den offenen und/oder verschließbaren Hohlkörper eingefüllt wird und erst durch diesen seine Form erhält. Der Vorteil ist, dass auf den Vorgang des Pressens eines Kerns gegebenenfalls ganz verzichtet werden kann.

Indem der offene und/oder verschließbare Hohlkörper aus einem einzigen Papier-, Karton- oder Pappzuschnitt hergestellt ist, kann der Herstellungsaufwand weiter minimiert werden. Die betreffende Form kann aus einem Bogen oder einer Rolle des betreffenden Papier-, Karton oder Pappmaterials ausgeschnitten oder vorzugsweise ausgestanzt werden.

Im Rahmen eines bevorzugten Herstellungsverfahrens wird der Papierzuschnitt zur Bildung des offenen und/oder verschließbaren Hohlkörpers gefaltet und/oder verklebt. Insbesondere durch Falten lassen sich relativ scharfe Kanten erzeugen, die beim fertigen Vakuumisolationpaneel dazu beitragen, die Bildung von Wärmebrücken zwischen zwei aneinander grenzenden Vakuumisolationspaneelen zu vermeiden. Durch Verkleben lässt sich die gewünschte Form insbesondere im Bereich von ursprünglichen Öffnungen stabilisieren.

Die Erfindung sieht weiterhin vor, dass das Papier zu einer Pappschachtel geformt ist, die vorzugsweise etwa die selbe Gestalt aufweist wie der fertige Vakuumdämmkörper. Ein Papiersack, aber auch eine Pappschachtel, kann den umschlossenen Kern vollständig und lückenlos umhüllen und ist daher in der Lage, die Kernpartikel zuverlässig zurückzuhalten. Bei dem Papiersack kann es sich beispielsweise um einen Blockbodenbeutel, einen Klotzbodenbeutel oder einen Kreuzbodenbeutel handeln. Vorzugsweise findet dessen Faltung vor seiner Befüllung statt.

Weitere Vorzüge ergeben sich dadurch, dass der Papierzuschnitt zu dem Papiersack verklebt ist. Hierzu kann ein für die Verklebung von Papier geeigneter Klebstoff verwendet werden; hierfür gibt es eine große Palette von Klebstoffen, welche standardmäßig im Handel erhältlich sind. Bevorzugt kann der Zuschnitt zunächst entlang zweier Längsseiten zusammengeklebt werden zu einer schlauchförmigen Geometrie mit zwei noch offenen Enden. Sodann werden diese Enden verklebt; vorzugsweise ein Ende vor dem Befüllen mit dem Kern(material) und das andere Ende nach dem Befüllen mit dem Kern(material).

Damit ein Papiersack oder eine Pappschachtel die gewünschte Form möglichst exakt einnimt, wird dieser/diese bei der Herstellung gefaltet. Dies kann teilweise vor, zwischen oder nach einem oder mehreren Verklebungs- oder Verbindungsschritten erfolgen.

Bei einem Papiersack ist es empfehlenswert, dies nach dem ersten Verklebungsschritt vorzunehmen, wobei der Zuschnitt eine Schlauchform annimmt, sowie ggf. vor, bei oder nach dem weiteren Verfahrensschritt, wobei der Boden verschlossen wird, insbesondere durch Verkleben.

Eine Faltschachtel kann dagegen auch ohne Verkleben stabilisiert und verschlossen werden. Hier findet das Falten bevorzugt unmittelbar nach dem Ausstanzen statt, und wenn alle Faltkanten angelegt sind, kann die Schachtelform durch Umbiegen der Faltkanten zusammengebaut werden. Zum anschließenden Befüllen wird zunächst eine Öffnung gelassen, die schlussendlich jedoch auch verschlossen wird, beispielsweise durch einen vorzugsweise einstückigen Deckel.

Nach dem Zusammenfalten verfügt die Schachtel über einen vorzugsweise rechteckigen oder quadratischen Boden sowie einen entlang dessen Umfangs rundum laufenden Rand, wobei entlang jedes geraden Kantenabschnitts des Bodens jeweils eine Seitenwand nach oben geklappt ist. eine Damit während und nach dem Befüllen dieses Schachtel-Korpus in dem Bereich, wo jeweils zwei solche Seitenwände im Bereich einer vertikalen Kante zusammentreffen, das eingefültle Kernmaterial nicht entweichen bzw. herausrieseln kann, sieht die Erfindung vor, dass zwei benachbarte Seitenwände - also vertikale Rand- oder Stirnflächen - im Bereich ihrer gemeinsamen Kante miteinander verbunden sind, vorzugsweise lückenlos bis zu der oberseitigen Befüllungsöffnung.

Dies kann zum Einen durch Applizieren eines Klebebandes über und entlang der vertikalen Kante erreicht werden, an der Außen- und/oder Innenseite.

Darüber hinaus ist es aber auch möglich, im Bereich einer solchen Kante an wenigstens einer daran grenzenden Seitenwand beim Zuschnitt eine Lasche zu belassen, die dann um die betreffende, vertikale Kante umgebogen werden kann, um flächig an der benachbarten Seitenwand anzuliegen.

Mit dieser benachbarten Seitenwand kann diese Lasche dann form- und/oder stoffschlüssig verbunden werden.

Ein Stoffschluss wird dabei durch flächiges Verkleben erreicht, wofür bspw. einfach ein flüssig aufgetragener Klebstoff ausreichend ist.

Ein Formschluss lässt sich dadurch erzielen, dass die umgebogene Lasche von der angrenzenden Seitenwand innen und außen umgriffen wird. Dazu sollte die angrenzende Seitenwand ihrerseits eine anhängende Lasche aufweisen, die jedoch bevorzugt an ihrer freien Längskante - der späteren Oberkante des Korpus - angeformt ist bzw. beim Zuschnitt daran belassen wird. Wird diese Lasche um eben diese Oberkante des Korpus umgebogen, und zwar über die eine oder die beiden seitlichen Laschen im Bereich einer oder beider vertikalen Kanten dieser Seitenwand, so sind die aneinander stoßenden Seitenwände formschlüssig vebunden. Dazu ist es vorteilhaft, wenn die Laschen möglichst rechteckig oder trapezförmig gestaltet sind und in ihrer zur Höhe des Korpus parallelen Erstreckung dessen Höhe entsprechen, so dass sie bei dem Versuch des Wegschwenkens einer Seitenwand von innen an den übergreifenden Teil zwischen der inneren und äußeren Lage der darüber gebogenen Seitenwand stoßen.

Damit der Deckel während des Transports und/oder während einer Zwischenlagerung nicht mehr versehentlich aufgehen kann, wird empohlen, diesen in geschlossenem Zustand an dem Korpus der Schachtel zu fixieren, beispielsweise mittels eines über die Verschlussspalte geklebten Klebebandes.

Gerade bei ebenflächig berandeten Vakuumkörpern oder Vakuumisolationspaneelen kann somit die Kerngestaltung auf eine geeignete Faltung eines passend ausgestanzten oder ausgeschnitten Papier-, Karton- oder Pappzuschnitts reduziert werden. Bei bisher üblichen Vakuumisolationspaneelen erhält die den Kern umschließende Hochbarrierefolie ihre Formstabilität von einem in der gewünschten Form gepressten Kern. Die neuartige Struktur eines Vakuumisolationspaneels erlaubt es, ohne ein geformtes Kernmaterial auszukommen. Vielmehr erhält dann nicht nur die Umhüllungsfolie, sondern auch der jene stützende Kern seine Gestalt ausschließlich von dem in der gewünschten Form ausgestanzten und gefalteten Papier-, Karton- oder Pappmaterial, sofern dieses eine ausreichende Formstabilität hat.

Die Erfindung lässt sich dahingehend weiterbilden, dass ein Papiersack oder eine Pappschachtel wenigstens eine Befüllungsöffnung aufweist, die nach Einfüllen des Kernmaterials verschlossen ist. Dabei ist es je nach Herstellungsverfahren möglich, durch diese Befüllungsöffnung das Kernmaterial in pulverförmigem Zustand einzufüllen, so dass es frühestens nach dem Verschließen des Beutels oder der Schachtel, ggf. samt Umhüllung mit einer Folie, gepresst wird, oder durch die Befüllungsöffnung wird ein bereits zuvor in die entsprechende Form gepresster Kern eingeschoben. Im Fall einer Schachtel kann auf einen Pressvorgang sogar vollständig verzichtet werden, sofern die Pappe der Schachtel steif genug ist, um ihre Gestalt zumindest bis zu dem Evakuierungsschritt unverändert beizubehalten.

Nach Einfüllen des Kernmaterials kann die Befüllungsöffnung des Papiersacks mittels einer anhängenden Lasche verschlossen werden, die beispielsweise verklebt werden kann.

Die Lasche kann in geschlossenem Zustand bevorzugt eine Stirnfläche eines plattenförmigen Vakuumdämmkörpers bedecken. Demzufolge wird der Papiersack so wenig als möglich geschwächt, weil die Form einer tiefen, flachen Tasche relativ stabil ist.

Im Fall einer Pappschachtel kann es vorteilhafter sein, dass die Befüllungsöffnung der Pappschachtel nach Einfüllen des Kernmaterials mittels eines Deckels verschlossen wird, beispielsweise durch Zuklappen eines an dem Korpus einseitig anhängenden Deckels oder durch Auflegen eines losen Deckels. Dabei kann ein solcher Deckel wenigstens eine durch eine Faltkante abgegrenzte Zunge aufweisen, bevorzugt entlang einer freien, der Verbindungskante zwischen Deckel und Korpus der Schachtel abgewandten oder gegenüber liegenden Kante. Eine solche Zunge kann dann gegebenenfalls innerhalb der Schachtel eingesteckt werden, um den Deckel zu stabilisieren. Bevorzugt sollte der Deckel jedoch außen über den Korpus greifen, damit er beim Zuklappen oder Auflegen nicht in Konflikt mit einem bereits eingefüllten Pulver oder sonstigen Gemenge gelangt. Ein Deckel sollte demnach eine an seiner Grundfläche entlang laufende Schürze aufweisen, die über einen entlang der Grundfläche des Korpus nach oben ragenden Randes greift. Bei einem losen Deckel sollte die Schürze und der Rand jeweils an vier Seiten der betreffenden Grundfläche entlang laufen; bei einem an dem Korpus hängenden Deckel nur entlang der jeweils drei freien Seiten.

Um ein versehentliches Aufklappen des Deckels zu unterbinden, kann dieser nach Einfüllen des bspw. pulverförmigen Kernmaterials mit einem Klebestreifen oder auf andere Weise mit dem Korpus der Schachtel verbunden werden.

Indem der Deckel - wie die Erfindung weiterhin vorsieht - in geschlossenem Zustand eine Grund- oder Hauptfläche eines plattenförmigen Vakuumdämmkörpers bedeckt, steht eine maximal große Füllöffnung zur Verfügung; das Befüllen kann daher ganz einfach bewerkstelligt werden, indem die Schachtel mit dem offenen Deckel von oben befüllt wird. Der dabei noch geöffnete Deckel hinterlässt andererseits im Allgemeinen keinen nennenswerten Stabilitätsverlust, weil die verwendete Schachtelpappe vergleichsweise fest und stabil ist.

Eine weitere Konstruktionsvorschrift sieht vor, dass der Papiersack oder der Pappkarton wenigstens eine Entlüftungsöffnung aufweist, die beim Einfüllen des Kernmaterials und/oder beim Zusammenpressen oder Evakuieren des Papiersacks ein Entweichen der enthaltenen Luft ermöglicht. Trotz der erwünschten Eigenschaft des Papiersacks, die Partikel des enthaltenen Kerns oder Kernpulvers zuverlässig zurückzuhalten, sollte der Beutel die ebenfalls umschlossene Luft entweichen lassen, so dass während des Befüllens, Pressens und/oder Evakuierens kein Luftkissen den betreffenden Prozessschritt beeinträchtigt und/oder das Herstellungsverfahren verzögert.

Zur Realisierung des obigen Merkmals sieht die Erfindung weiter vor, dass eine Entlüftungsöffnung durch eine oder mehrere Perforationen gebildet ist, insbesondere durch eine oder mehrere Nadelungen. Ein solcher Bearbeitungsschritt hinterlässt nur punktförmige Öffnungen, welche kaum Partikel entweichen lassen, jedoch für Luft kein Hindernis darstellen.

Eine weitere Optimierung kann dadurch erfolgen, dass der Papiersack oder die Pappschachtel wenigstens ein Ventil oder wenigstens einen Ventilbereich aufweist.

Ein solches Ventil kann insbesondere die Funktion unterstützen, wonach das Pulver möglichst vollständig zurückgehalten wird, indem es den potentiellen, lichten Öffnungsquerschnitt einer Entlüftungsöffnung weiter verringert. Diese Funktion ist eher vergleichbar mit einem Filter, der Partikel zurückhält, aber gasförmige Stoffe passieren lässt.

Indem ein solches Ventil die Struktur eines Einwegventils aufweist, kann es das Zurückströmen entwichener Luft in den Innenraum des Papiersacks verhindern. Dadurch wird eine unerwünschte Belüftung während einer Lagerungsphase im Rahmen des Herstellungsprozesses erschwert oder vermieden.

Eine Möglichkeit zur Realisierung einer Ventilfunktion besteht darin, dass im Bereich eines Ventils Perforationen oder Nadelungen in allen Papierlagen vorgesehen sind, jedoch gegeneinander versetzt. Dadurch kann Luft, Dampf und Gas aus dem Inneren des Papiersacks entweichen, während Partikel zurückgehalten werden, da diese keine lichte Öffnung verspüren, wodurch sie entweichen könnten.

Bevorzugt besteht das Kernmaterial aus einem Pulver eines porösen, insbesondere offenporigen Materials und/oder ist aus einem solchen gepresst. Ein geeignetes Material ist beispielsweise pyrogene Kieselsäure. Aber auch faserförmige Materialien können Verwendung finden, bspw. Glasfasern.

Schließlich entspricht es der Lehre der Erfindung, dass die Hülle eine Metallfolie, insbesondere eine Aluminiumfolie, und/oder eine metallisiserte Folie, insbesondere eine Hochbarrierefolie, umfasst. Eine solche Hochbarrierefolie kann eine tragende Schicht aus einem Kunststoff aufweisen, welche an einer Seite mit einer Metallisierung und an der gegenüber liegenden Seite mit einer Siegelschicht, vorzugsweise eine Beschichtung aus einem thermoplastischen Material, versehen ist. Auch eine Aluminiumfolie sollte an einer Seite eine niedrig schmelzende und dadurch versiegelbare Beschichtung aus einem Kusntstoff, insbesondere aus einem thermoplastischen Material aufweisen.

Weitere Merkmale, Einzelheiten, Vorteile und Wirkungen auf der Basis der Erfindung ergeben sich aus der folgenden Beschreibung einiger bevorzugter Ausführungsformen der Erfindung sowie anhand der Zeichnung. Hierbei zeigt:
- Fig. 1: eine perspektivische Ansicht eines mit Kernmaterial befüllten Papiersacks mit einer Kreuzbodenbeutelfaltung vor dem Einhüllen in eine Folie;
- Fig. 2: eine etwa der Fig. 1 entsprechende Darstellung einer abgewandelten Ausführungsform nicht Teil der Erfindung mit einer Flachbeutelfaltung;
- Fig. 3: eine abermals abgewandelte Ausführungform der Erfindung mit einer Klotzbodenbeutelfaltung in einer der Fig. 1 entsprechenden Darstellung; sowie
- Fig. 4: eine noch unbefüllte Pappschachtel für eine nochmals veränderte Ausführungsform der Erfindung in einer perspektivischen Darstellung.

Die Herstellung eines erfindungsgemäßen Vakuumdämmkörpers gestaltet sich wie folgt:
Zunächst wird ein Papiersack 1 angefertigt.

Dazu wird Papier ausgewählt, beispielsweise hergestellt unter überwiegender Verwendung von Altpapier, vorzugsweise mit einem Flächengewicht zwischen 50 und 100 g/qm.

Im Rahmen der Erfindung werden wenigstens eine Bahn oder ein Bogen aus dem Papier an vorgegebenen Stellen mittels einer oder mehrerer Nadeln perforiert.

Sodann werden mehrere derartige Bahnen oder Bögen abgeschnitten und/oder ausgewählt und derart aufeinandergelegt oder zusammengeführt, dass die Perforierungen in jeweils benachbarten Lagen geringfügig gegeneinander versetzt sind, insbesondere derart, dass die Perforierungen einander überhaupt nicht überlappen, sondern möglichst sogar einen mehr oder weniger großen Abstand aufweisen. Bevorzugt liegen dabei etwa drei Papierlagen übereinander.

Als nächstes werden diese aufeinander gelegten Papierbögen oder zusammengeführten Papierbahnen zu einem mehrlagigen Papierverbund verklebt. Dabei ist darauf zu achten, dass kein Klebstoff in den Bereich der Perforierungen gelangen kann.

Aus diesem mehrlagigen Papiermaterial wird sodann ein Zuschnitt mit einem geeigneten, vorzugsweise rechteckigen Umriss, angefertigt, beispielsweise ausgestanzt oder abgeschnitten.

Sodann werden zwei einander gegenüber liegende Längsseiten dieses Zuschnitts miteinander verklebt, unter Verwendung eines für Papier geeigneten Klebstoffes. Der Papierzuschnitt erhält dadurch die Form eines Schlauchs.

Bevorzugt wird dieser Schlauch sodann gefaltet, derart, dass sich in Längsrichtung verlaufende Faltkanten 2 ergeben. Dieser Schritt könnte je nach dem Herstellungsverfahren auch vor dem Verkleben der Längskanten stattfinden. Je nach dem Faltungsverfahren können zwei, vier oder sechs in Längsrichtung des Schlauches verlaufende Faltungskanten 2 vorgesehen sein.

Sodann wird ein Ende dieses Schlauchs verschlossen. Dazu werden die Ränder des Zuschnitts an einem bislang noch offenen Ende um quer zu den Längskanten 2 verlaufende Faltungslinien 3 nach innen gefaltet, ggf. unter Ausbildung weiterer Faltkanten 4 im Bereich der von den längs und quer verlaufenden Faltungskanten 2, 3 gebildeten Ecken 5 des künftigen Papiersacks 1.

Als nächstes wird dieses bis dahin noch offene Ende des Schlauchs 1 verschlossen, indem die nach innen geschlagenen Randbereiche 6 des Zuschnitts miteinander verklebt werden, ebenfalls unter Zuhilfenahme eines für Papier geeigneten Klebstoffs.

Nun wird das Kernmaterial in den Papiersack 1 eingefüllt. Für den Kern wird ein offenporiges Material verwendet, beispielsweise pyrogene Kieselsäure. Dieses Material kann entweder in pulverförmigem Zustand in den Sack eingefüllt werden, oder es wird vor dem Einfüllen in die gewünschte Form des betreffenden Vakuumdämmkörpers gepresst und sodann als beispielsweise block- oder plattenförmiger Körper in den Papiersack 1 eingeschoben.

Ist dies geschehen, wird der Papiersack 1 an seinem zuletzt noch offenen Ende verschlossen, ebenfalls unter Zuhilfenahme eines zum Verkleben von Papier geeigneten Klebstoffs. Dabei können entweder bereits vorgefaltete Faltungslinien 3, 4 verwendet werden, insbesondere wenn pulverförmiges Kernmaterial Verwendung findet, oder die betreffenden Faltungen 3, 4 werden über die Kanten eines vorgepressten Kernkörpers vorgenommen, d.h. einfach durch Umlegen eines entsprechenden Randbereichs 6 über die betreffenden Kanten des Kerns. Dabei besteht die Möglichkeit, zusätzlich zu den quer zu den Längskanten 2 des ursprünglichen Schlauchs verlaufenden Faltkanten 3 in den Eckbereichen 5, wo eben diese Quer-Faltkanten 3 auf die Längskanten 2 treffen, weitere Faltungen 4 vorzusehen, um in den Ecken 5 überstehende Bereiche des Papierzuschnitts mehrlagig übereinander zu falten.

In einem abermals folgenden Verfahrensschritt wird der Papiersack 1 an seinem zuletzt noch offenen Ende verschlossen, insbesondere verklebt.

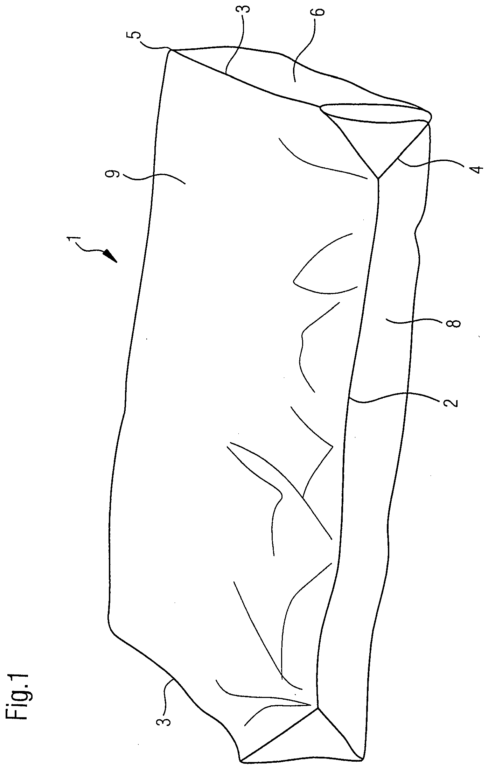

Der fertige Papiersack 1 hat nun durch die Art seines Zuschnittes, seiner Faltung und ggf. Verklebung etwa eine flache, quaderförmige Gestalt, mit zwei großen, etwa rechteckigen Grundflächen 9, welche an ihren vier einander entsprechenden Kanten durch weitere Flächen miteinander verbunden sind, nämlich entlang ihrer kürzeren Kanten 3 mittels kleinerer Stirnflächen 6 sowie über längere Stirnflächen 8 im Bereich der Längskanten 2. Natürlich sind diese Flächen 6, 8, 9 infolge des flexiblen, faltbaren Papiermaterials nicht wirklich eben und stabil, sondern ein- und ausgebeult wie in Fig. 1 zu sehen. Jedoch sind durch die verschiedenen Faltungen 3, 4 die obigen Flächen zumindest angelegt; dabei kann in den Stoßbereichen zwischen je zwei verschieden langen Stirnflächen 6, 8 je ein Faltungsdreieck 10 vorhanden sein, um überschüssiges Papier wegzufalten.

Ist dies geschehen, gibt es mehrere Verfahrensvarianten. Wurde das Kernmaterial pulverförmig eingefüllt, kann der vollständig verschlossene Papiersack 1 als nächstes in die gewünschte Form des fertigen Vakuumisolationspaneels gepresst werden.

Anderenfalls, insbesondere wenn ein vorgeformter Kern in den Papiersack 1 eingeschoben wurde, kann dieser Arbeitsschritt entfallen, und stattdessen folgt sogleich der nun beschriebene Vorgang, wobei der verschlossene Papiersack 1 nun von einer Folie umhüllt wird.

Bei dieser Folie kann es sich beispielsweise um eine Metallfolie handeln, insbesondere um eine Aluminiumfolie, oder um eine Hochbarrierefolie, wobei eine tragende Folienschicht aus einem Kunststoff an einer Seite mit einer Metallschicht versehen ist, beispielsweise mit dem betreffenden Metall bedampft ist, während an der gegenüber liegenden Seite eine Siegelschicht aus einem niedrig schmelzenden Thermoplast aufgeschichtet ist.

Aus der ausgewählten Folie wird ein Zuschnitt angefertigt, ähnlich dem Zuschnitt für den Papiersack 1. Im Idealfall kann der Zuschnitt für die Folie identisch sein mit dem Zuschnitt für den Papiersack 1. Allerdings können auch zwei vorzugsweise deckungsgleiche Folienzuschnitte angefertigt werden, welche jeweils eine etwas größere Fläche aufweisen als die Grundfläche eines plattenförmigen Kerns.

Die Folie wird nun um den Papiersack 1 gelegt.

Bei Verwendung eines einzigen Folienzuschnitts wird dazu vorzugsweise in einem ersten Verfahrensschritt die Folie in einer Richtung vollständig um den Papiersack 1 geschlungen, bis sie diesen schlauchförmig umgibt. Sodann wird eine erste Siegelnaht erstellt, womit die beiden nach dem Umschlingen des Papiersacks 1 einander unmittelbar benachbarten Kanten des Folienzuschnitts miteinander versiegelt werden, so dass sich eine schlauchförmige Geometrie ergibt.

In einem nachfolgenden Verfahrensschritt wird wenigstens eines der beiden Enden dieses Folienschlauchs vollständig verschlossen.

Dies kann insbesondere bei einem flachen Kernkörper dadurch erfolgen, dass die beiden flachen Endbereiche unter Einfalten der betreffenden Endbereiche nach innen unmittelbar aufeinander liegen und miteinander versiegelt werden. Andererseits kann dazu auch an den Schmalseiten die Folie nach innen geschlagen werden, und in den Eckbereichen können überstehende Folienanteile weggefaltet werden, indem zusätzliche Faltkanten geschaffen werden, welche sich im Bereich einer Ecke des Kernkörpers bzw. des diesen umgebenden Papiersacks 1 treffen.

Auch das gegenüber liegende Schlauchende der Folie kann zumindest teilweise verschlossen werden, vorzugsweise unter Belassung einer Evakuierungsöffnung.

Bei Verwendung zweier Folienzuschnitte werden diese etwas deckungsgleich zueinander unterhalb und oberhalb des Körpers bzw. Papiersacks 1 angeordnet, wobei deren Siegelschichten einander zugewandt sind. Der Kern befindet sich in der entsprechenden Ausrichtung dazwischen wie der Belag zwischen den beiden Brothälften eines Sandwichs. Sodann können die beiden, überstehenden Randbereiche der Folienzuschnitte rundum miteinander versiegelt werden, wobei nur eine Evakuierungsöffnung verbleiben soll.

Eine Evakuierungsöffnung kann sich an einer beliebigen Stelle im Bereich jeder Siegelnaht befinden, oder an einer anderen geeigneten Stelle, vorzugsweise jedoch in der Nähe einer oder mehrerer Perforierungen oder sonstiger Entlüftungsöffnungen in dem Papiersack 1. Im Normalfall genügt insgesamt eine einzige Evakuierungsöffnung, obwohl auch mehrere vorgesehen sein könnten.

Falls noch nicht geschehen, kann der soweit fertiggestellte, aber noch nicht evakuierte Vakuumdämmkörper nun in seine gewünschte Form gebracht werden, vorzugsweise mittels einer Presse, die diesen insbesondere in einer Richtung lotrecht zu seiner Grundfläche zusammenpresst.

In einem folgenden Herstellungsschritt wird der noch nicht evakuierte Vakuumdämmkörper nun in eine Vakuumkammer gelegt, und diese wird sodann evakuiert, beispielsweise auf einen Druck von weniger als 100 mbar, vorzugsweise auf einen Druck von 10 mbar oder weniger, insbesondere auf einen Druck von 1 mbar oder weniger. Dabei strömt die noch enthaltene Luft durch die Perforierungen des Sackes nach außen, ohne dass auch Partikel des Kerns folgen könnten, weil diese von dem Papiersack 1 zurückgehalten werden und diesen im Gegensatz zur Luft nicht verlassen können.

Während dieses evakuierten Zustandes wird (werden) die noch verbliebene(n) Evakuierungsöffnung(en) verschlossen, insbesondere versiegelt. Der Vakuumisolationskörper ist fertiggestellt.

Die Ausführungsformen der Papiersäcke 1, 1', 1" nach den Fig. 1 bis 3 unterscheiden sich voneinander vor allem durch die verwendete Faltungstechnik.

In Fig. 1 ist eine Faltung des Papiersacks 1 nach dem Kreuzbodenbeutelprinzip wiedergegeben. Man erkennt nur zwei Längskanten 2, aber einen durch die umgesschlagenen Randbereiche 6 gebildeten Boden, der sich etwa rechtwinklig zu den angrenzenden Flächen des gefüllten Papieracks 1 ertreckt und bei diesem Anwendungsfall eine Stirnseite des fertigen Vakuumisolationspaneels bildet. Bei der Kreuzbodenfaltung gibt es vier Quer-Faltkanten 3, aber nur zwei ausgeprägte Längs-Faltkanten 2.

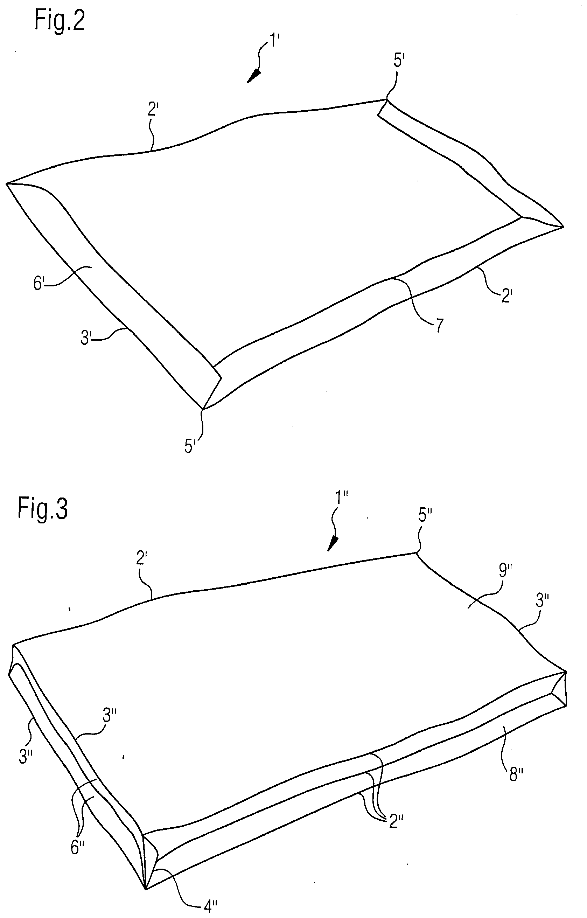

Fig. 2 zeigt einen mit Kernmaterial befüllten Papiersack 1', der es nicht Teil der Erfindung ist, gefaltet nach dem Flachbeutelprinzip. Dies bedeutet, es gibt hier keine durch Faltungen ausgeprägte Stirnseiten, sondern - ähnlich einem Briefumschlag - gibt es zwar zwei Längsfaltkanten 2' und eine in Längsrichtung verlaufende Klebung 7; allerdings auch nur zwei quer dazu verlaufende Quer-Faltkanten 3'. Dieser Papiersack 1' hat etwa die Gestalt eines Briefumschlages.

Demgegenüber zeigt Fig. 3 einen ebenfalls mit Kernmaterial gefüllten Papiersack 1", der mit Faltungen ähnlich einem Klotzbodenbeutel versehen ist. Hier gibt es wieder vier ausgeprägte Stirnseiten ähnlich wie bei dem Papiersack 1 nach Fig. 1; allerdings sind auch die beiden in Längsrichtung, also parallel zu den Längskanten 2" verlaufenden Längsstirnseiten 8 hier durch Faltungslinien 2" von den beiden Beutelgrundseiten 9 abgetrennt; es gibt also insgesamt vier Quer-Faltkanten 3" und insgeamt sechs Längsfaltkanten 2", von denen vier - von außen gesehen - je eine konvexe Kante bilden und die zwei restlichen sind ursprünglich konkav gefaltet, strecken sich allerdings in befülltem Zustand.

Allen Ausführungsformen gemeinsam ist, dass vorzugsweise durch versetzte Perforierungen in den unterschiedlichen Papierlagen des betreffenden Papiersacks 1, 1', 1" bevorzugt eine Ventilfunktion gegeben ist, die zwar Luft aus dem Papiersack 1, 1', 1" entweichen lässt, jedoch keine Partikel des darin enthaltenen Kernmaterials.

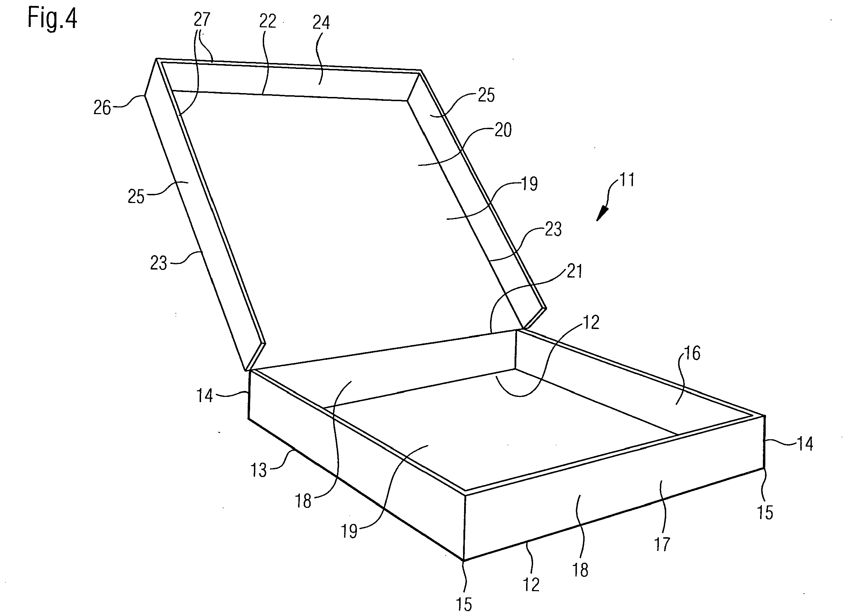

Die Darstellung nach Fig. 4 bezieht sich auf eine etwas abweichende Ausführungsform der Erfindung. Hierbei handelt es sich nicht um einen aus einem leichten und dadurch sehr flexiblen Papier gefalteten Beutel zum einfüllen des kernmaterials, sondern um eine aus einem steiferen Karton- oder Pappmaterial gefaltete Schachtel. Obzwar diese generell sowohl aus Karton als auch aus Pappe bestehen kann, soll im Folgenden und im Rahmen dieser gesamten Anmeldung dafür stellvertretend der Begriff "Pappschachtel" verwendet werden. Der Begriff "Pappschachtel" soll also auch Schachteln aus Karton mit umfassen. Ein Unterschied zwischen Karton und Pappe wurde eingangs erwähnt und betrifft die Grammatur, und damit natürlich auch die Festigkeit des betreffenden Materials.

Ein weiteres, optionales Merkmal besteht darin, dass mehrere Lagen vorhanden sein können, welche miteinander verbunden sind, beispielsweise miteinander verklebt. Dabei ist es außerdem möglich, dass eine innere Lage eine Wellung aufweist, so dass zwei äußere, daran zu beiden Seiten anschließende Lagen einen durch die Wellung hervorgerufenen Abstand aufweisen, welcher etwa der Gesamthöhe oder -stärke der Wellung entspricht. Dadurch können zu beiden Seiten daran angrenzende Papier- oder Kartonlagen die Funktion eines Ober- und Unterzugs erfüllen, ähnlich bei auf Biegung belasteten Baumaterialien. Der gesamte Materialverbund erhält dadurch eine weitaus höhrere Biegefestigkeit als eine oder mehrere, nicht miteinander verbundene Einzellagen.

Wie man der Fig. 4 weiter entnehmen kann, besteht die Pappschachtel 11 im Wesentlichen aus einem Korpus 17 und einem Deckel 20.

Bevorzugt verfügt sowohl der Korpus 17 als auch der Deckel 20 über je eine große, rechteckige oder quadratische Schachtelgrundfläche 19; diese beiden Schachtelgrundflächen 19 haben dieselbe Gestalt und auch näherungsweise dieselbe Größe; jedoch wird der Deckel 20 zum Verschließen über den Korpus 17 gestülpt und übergreift diesen vorzugsweise an dessen Außenseite; daher sollte die Deckel-Grundfläche 19 etwa um die doppelte Stärke des Karton- oder Pappmaterials länger und auch breiter sein als die Korpus-Grundfläche 19.

Entlang einer vorderen und einer hinteren Längskante 12 der Korpus-Grundfläche 19 schließt sich über je eine Faltung je eine etwa vertikal aufragende Längsstirnfläche 18 an.

In ähnlicher Weise setzt sich die Korpus-Grundfläche 19 an ihren beiden seitlichen Kanten 13 jeweils in Form einer rechten und einer linken Randfläche 16 fort.

In den Ecken 15 der Schachtelgrundfläche 19 des Korpus 17, dort, wo jeweils eine Längsstirnfläche 18 und eine seitliche Randfläche 16 zusammentreffen, befindet sich jeweils eine vertikale Kante 14. Da somit alle von der Schachtelgrundfläche 19 des Korpus 17 aufragende Flächen 16, 18 miteinander verbunden sind, hat der Korpus 17 etwa die Gestalt eines unten und an vier Seiten geschlossenen, nur oben offenen, quaderförmigen Trogs. Dahinein lässt sich pulver- oder faserförmiges Kernmaterial leicht einfüllen, vorzugsweise genauso viel, dass der Korpus 17 oben gestrichen voll ist.

Damit das Pulver oder Fasergemenge dabei nicht entlang der vertikalen Kanten 14 herausfallen kann, sollten die von der Schachtelgrundfläche 19 des Korpus 17 aufragenden Flächen 16, 18 im Bereich der vertikalen Kanten 14 miteinander verbunden sein. Dies kann beispielsweise dadurch erfolgen, dass an dem Zuschnitt für den Korpus 17 an den seitlichen Stirnkanten der vorne und hinten anhängenden Bereiche, welche nachher durch Hochfalten die Längsstirnflächen 18 bilden, jeweils nach außen über jene überstehende Laschen hängen. Nach dem Hochfalten dieser Längsstirnflächen 18 um die Faltkanten 12 können jene je zwei Laschen im Bereich der selben Randfläche 16 ihrerseits entlang der Kanten 14 nach innen umgefaltet werden, also aufeinander zu bis in eine gemeinsame Ebene. Ferner kann an der freien Oberkante der betreffenden Randfläche 16 eine Lasche hängen, welche etwa genauso groß ist wie die betreffende Randfläche 16 selbst. Nach dem Hochfalten einer Randfläche 16 außen neben die dortigen Laschen der vorderen und hinteren Längsstirnflächen 16 kann diese Lasche an der betreffenden Randfläche 16 um deren Oberkante nach innen gefaltet werden und schließlich nach unten gefaltet, wobei sie jeweils insgesamt zwei Laschen der Längsstirnflächen 18 innen umgreift.

Um den Korpus 17 der Pappschachtel 11 auch oben zu verschließen, dient der Deckel 20. Für dessen Struktur gibt es mehrere Möglichkeiten.

Bei einer ersten, in der Zeichnung nicht wiedergegebenen Ausführungsform kann der Deckel 20 als von dem Korpus 17 vollständig getrenntes Teil hergestellt werden, mit der selben Gestalt, aber geringfügig größer, so dass er sich bei gegenüber dem Korpus 17 gestürztem Zustand - wobei also die Grundfläche 19 des Deckels 20 oben ist, also oberhalb der seitlich daran angrenzenden und schürzenförmig davon nach unten verlaufenden Rand- und Stirnflächen - über den Korpus 17 stülpen lässt, um jenen zu verschließen. Zur Fixierung können dann entlang aller vier Kanten Klebebänder angeklebt werden, etwa hälftig an dem Korpus 17 entlanglaufend und zur anderen Hälfte entlang des Deckels 20.

Bei der in Fig. 4 wiedergegebenen Ausführungsform ist allerdings der Deckel 20 nicht von dem Korpus 17 getrennt.

Vielmehr hängt die Grundfläche 19 des Deckels 20 über eine Faltkante 21 an der rückwärtigen Länsstirnfläche 18 des Korpus 17, schließt also an dessen obere Kante an.

An der gegenüberliegenden Kante 22 der Deckel-Grundfläche 19 sowie an deren beiden seitlichen Kanten 23 befindet sich jeweils eine dazu lotrecht verlaufende Randfläche 24 bzw Stirnfläche 25.

Vorzugsweise sind die Höhen der Randfläche 24 und der beiden seitlichen Stirnflächen 25 des Deckels 20 gleich groß.

Die beiden Randflächen 18 und die beiden seitlichen Stirnflächen 16 des Korpus 17 sind ebenfalls bevorzugt gleich groß.

Schließlich sollte die gemeinsame Höhe der Randflächen 24 und Stirnflächen 25 des Deckels 20 leich der gemeinsamen Höhe der Randflächen 18 und Stirnflächen 16 des Korpus 17 sein.

Die schürzenartig nach unten hängenden Randflächen 24 und Stirnflächen 25 des Deckels 20 können ebenso wie die Randflächen 16 und Stirnflächen 18 des Korpus 17 in den Bereichen der Ecken 26 bzw. der gemeinsamen Kanten miteinander verbunden sein, beispielsweise anhand des oben unter Bezugnahme auf den Korpus 17 beschriebene Faltungsprinzips.

Auch bei einem losen Deckel können die jeweils aneinander grenzenden Rand- und Stirnflächen 16, 18; 24, 25 des Korpus 17 und/oder des Deckels 20 im Bereich einiger oder vorzugsweise aller vertikaler Kanten 14 durch geeignete Faltungen miteinander verbunden sein.

Wird der Deckel 20 um die Faltkante 21 nach unten geschwenkt und über die Außenflächen 16, 18 des Korpus 17 gestülpt, ergibt sich insgesamt eine rein quaderförmige Gestalt mit ausgeprägten Kanten 12, 13, 22, 23 und Ecken 15, 26.

Ist die Pappschachtel 11 somit nach Befüllen des Korpus 17 mit dem Kernmaterial durch den Deckel 20 verschlossen, kann der Deckel 20 im Bereich einer oder mehrerer seiner drei freien Kanten 27 mit der unteren Grundfläche 19 des Korpus 17 verklebt und damit verschlossen werden.

Sodann lässt er sich von einer vakuumdichten Folie umhüllen und nach Evakuieren seines Inhalts kann die ihn zunächst unvollständig umgebende Umhüllungsfolie vollständig und damit luftdicht veschweißt werden. Ein Pressen des Inhalts ist bei Verwendung der Pappschachtel 11 ist möglich, insbesondere wenn der Deckel 20 über den Korpus 17 greift.

Um den Evakuierungsvorgang zu erleichtern, können auch bei der Pappschachtel 11 an einer oder mehreren Stellen Ventile angebracht sein, welche Luft entweichen lassen, jedoch keine Partikel. Eine ähnliche Funktion können jedoch die Schlitze im Bereich der freien stirnkanten 27 des Deckels 20 erfüllen, welche insbesondere bei fest auf den Korpus 17 gedrücktem Deckel 20 eine Art künstiliches Ventil bilden, welches Gase wie Luft entweichen lässt, Partikel jedoch nicht. Diesbezüglich kann es vorteilhaft sein, zum Zukleben des Deckels 20 auf demKorpus 17 ein luftdurchlässiges Klebeband zu verwenden, um an dieser Stelle rundum Luft entweichen zu lassen.

**Bezugszeichenliste**

| | | | |
|---|---|---|---|
| 1 | Papiersack | 26 | Ecke |
| 2 | Längskante | 27 | Kante |
| 3 | Faltkante | | |
| 4 | Faltkante | | |
| 5 | Ecke | | |
| 6 | Randbereich | | |
| 7 | Klebung | | |
| 8 | Längsstirnseite | | |
| 9 | Beutelgrundseite | | |
| 10 | Faltdreieck | | |
| 11 | Pappschachtel | | |
| 12 | Längskante | | |
| 13 | Faltkante | | |
| 14 | Kante | | |
| 15 | Ecke | | |
| 16 | Randfläche | | |
| 17 | Korpus | | |
| 18 | Längsstirnfläche | | |
| 19 | Schachtelgrundfläche | | |
| 20 | Deckel | | |
| 21 | Faltkante | | |
| 22 | Kante | | |
| 23 | Kante | | |
| 24 | Randfläche | | |
| 25 | Stirnfläche | | |

## Patentansprüche

1. Folienumhüllter Vakuumdämmkörper mit einem Kern und einer den Kern umgebenden, luftdichten Hüllfolie, wobei zwischen dem Kern und der Hüllfolie noch eine oder mehrere Zwischenlagen aus Papier, Karton und/oder Pappe vorgesehen ist/sind, welche den Kern vollständig und vorzugsweise pulverdicht einhüllt/einhüllen, **dadurch gekennzeichnet, dass** die Zwischenlagen zu einer offenen und/oder verschließbaren Pappschachtel (11) gefaltet ist/sind, etwa von der selben Gestalt wie der fertige Vakuumdämmkörper.

2. Folienumhüllter Vakuumdämmkörper nach Anspruch 1, **dadurch gekennzeichnet, dass** eine einzelne Lage aus Papier oder Karton
a) eine Grammatur von 40 g/qm oder mehr aufweist, beispielsweise von 50 g/qm oder mehr, vorzugsweise von 60 g/qm oder mehr, insbesondere von 80 g/qm oder mehr, oder sogar von 100 g/m oder mehr; und/oder
b) eine Grammatur von 250 g/qm oder weniger aufweist, beispielsweise von 225 g/qm oder weniger, vorzugsweise von 200 g/qm oder weniger, insbesondere von 175 g/qm oder weniger, oder sogar von 150 g/m oder weniger.

3. Folienumhüllter Vakuumdämmkörper nach einem der Ansprüche 1 oder 2, **dadurch gekennzeichnet, dass** mehrere Lagen aus Papier und/oder Karton vorgesehen sind, vorzugsweise drei.

4. Folienumhüllter Vakuumdämmkörper nach einem der vorhergehenden Ansprüche, **dadurch gekennzeichnet, dass** wenigstens eine Papierlage mit einer oder zwei benachbarten Papierlagen zu einer einzigen Schicht verbunden ist, vorzugsweise verklebt.

5. Folienumhüllter Vakuumdämmkörper nach einem der vorhergehenden Ansprüche, **dadurch gekennzeichnet, dass** wenigstens eine von mehreren Papier- oder Kartonlagen, vorzugsweise eine innere Papier- oder Kartonlage, einem gewellten Verlauf folgt.

6. Folienumhüllter Vakuumdämmkörper nach einem der Ansprüche 3 bis 5, **dadurch gekennzeichnet, dass** insgesamt 3 Papierlagen mit einer Grammatur von jeweils 40 g/qm oder mehr vorgesehen sind, und/oder mit einer Grammatur von jeweils 250 g/qm oder weniger, sodass die gesamte Schicht aus miteinander verbundenen Lagen von Papier oder Karton insgesamt eine Grammatur zwischen 120 g/qm und 750 g/qm aufweist, vorzugsweise eine Grammatur zwischen 150 g/qm und 600 g/qm, insbesondere eine Grammatur zwischen 170 g/qm und 500 g/qm.

7. Folienumhüllter Vakuumdämmkörper nach einem der vorhergehenden Ansprüche, **dadurch gekennzeichnet, dass** das Papier zu 40 Gew.-% oder mehr aus Altpapier besteht, vorzugsweise zu 60 Gew.-% oder mehr aus Altpapier besteht, insbesondere zu 80 Gew.-% oder mehr aus Altpapier besteht.

8. Folienumhüllter Vakuumdämmkörper nach einem der vorhergehenden Ansprüche, **dadurch gekennzeichnet, dass** der offene und/oder verschließbare Hohlkörper aus einem einzigen Karton- oder Pappzuschnitt hergestellt ist.

9. Folienumhüllter Vakuumdämmkörper nach einem der vorhergehenden Ansprüche, **dadurch gekennzeichnet, dass** die Pappschachtel (11) wenigstens eine Befüllungsöffnung aufweist, die nach Einfüllen des Kernmaterials verschlossen ist.

10. Folienumhüllter Vakuumdämmkörper Anspruch 9, **dadurch gekennzeichnet, dass** die Befüllungsöffnung der Pappschachtel (11) nach Einfüllen des Kernmaterials mittels eines Deckels (20) verschlossen ist, beispielsweise durch Auflegen eines losen Deckels oder durch Zuklappen eines einseitig an dem Korpus (17) hängenden Deckels (20).

11. Folienumhüllter Vakuumdämmkörper Anspruch 10, **dadurch gekennzeichnet, dass** der Deckel (20) in geschlossenem Zustand eine Grund- oder Hauptfläche eines plattenförmigen Vakuumdämmkörpers bedeckt.

12. Folienumhüllter Vakuumdämmkörper nach einem der vorhergehenden Ansprüche, **dadurch gekennzeichnet, dass** die Pappschachtel (11) wenigstens eine Entlüftungsöffnung aufweist, die beim Einfüllen des Kernmaterials und/oder beim Zusammenpressen oder Evakuieren der Pappschachtel (11) ein Entweichen der enthaltenen Luft ermöglicht, wobei vorzugsweise eine Entlüftungsöffnung durch eine oder mehrere Perforationen gebildet ist, insbesondere durch eine oder mehrere Nadelungen.

13. Folienumhüllter Vakuumdämmkörper nach einem der vorhergehenden Ansprüche, **dadurch gekennzeichnet, dass** die Pappschachtel (11) wenigstens ein Ventil oder wenigstens einen Ventilbereich aufweist, wobei vorzugsweise im Bereich eines Ventils Perforationen oder Nadelungen in allen Papierlagen vorgesehen sind, jedoch gegeneinander versetzt.

14. Folienumhüllter Vakuumdämmkörper nach einem der vorhergehenden Ansprüche, **dadurch gekennzeichnet, dass** das Kernmaterial aus einem porösen Pulver und/oder aus einem Fasermaterial besteht und/oder gepresst ist.

15. Folienumhüllter Vakuumdämmkörper nach einem der vorhergehenden Ansprüche, **dadurch gekennzeichnet, dass** die Hülle eine Metallfolie, insbesondere eine Aluminiumfolie, und/oder eine metallisiserte Folie, insbesondere eine Hochbarrierefolie, umfasst.

## Claims

1. A foil-wrapped vacuum insulation element having a core and an air-tight envelope foil surrounding the core, wherein one or more intermediate layers of paper, cardboard and/or paperboard are also provided between the core and the envelope foil, and these layers envelop the core completely and preferably in a powder-tight manner, **characterized in that** the intermediate layers is/are folded into an open and/or closable paperboard box (11) which has approximately the same shape as the finished vacuum insulation element.

2. The foil-wrapped vacuum insulation element according to Claim 1, **characterized in that** a single layer of paper or cardboard
a) has a grammage of 40 g/m² or more, for example 50 g/m² or more, preferably 60 g/m² or more, in particular 80 g/m² or more, or even 100 g/m or more, and/or
b) has has a grammage of 250 g/m² or less, for example 225 g/m² or less, preferably 200 g/m² or less, in particular 175 g/m² or less, or even 150 g/m or less.

3. The foil-wrapped vacuum insulation element according to one of Claims 1 or 2, **characterized in that** multiple, preferably three, layers of paper and/or cardboard are provided.

4. The foil-wrapped vacuum insulation element according to one of the preceding claims, **characterized in that** at least one paper layer is joined, preferably glued, to one or two adjoining paper layers to form a single layer.

5. The foil-wrapped vacuum insulation element according to one of the preceding claims, **characterized in that** at least one of multiple paper or cardboard layers, preferably an inner paper or cardboard layer, has a corrugated profile.

6. The foil-wrapped vacuum insulation element according to one of Claims 3 to 5, **characterized in that** a total of three paper layers, having a grammage in each case of 40 g/m² or more, and/or having a grammage in each case of 250 g/m² or less, are provided, so that the overall layer made of joined-together layers of paper or cardboard has a total grammage between 120 g/m² and 750 g/m², preferably a grammage between 150 g/m² and 600 g/m², in particular a grammage between 170 g/m² and 500 g/m².

7. The foil-wrapped vacuum insulation element according to one of the preceding claims, **characterized in that** the paper is made up of 40% by weight or more of recovered paper, preferably 60% by weight or more of recovered paper, in particular 80% by weight or more of recovered paper.

8. The foil-wrapped vacuum insulation element according to one of the preceding Claims, **characterized in that** the open and/or closable hollow body is produced from a single cardboard or paperboard blank.

9. The foil-wrapped vacuum insulation element according to one of the preceding Claims, **characterized in that** the paperboard box (11) has at least one filling opening which is closed after the core material is filled in.

10. The foil-wrapped vacuum insulation element according to Claim 9, **characterized in that** the filling opening of the paperboard box (11) is closed by means of a lid (20) after the core material is filled in, for example by placing a loose lid on top or folding shut a lid (20) which hangs on the body (17) on one side.

11. The foil-wrapped vacuum insulation element according to Claim 10, **characterized in that** the lid (20) in the closed state covers a base surface or main surface of a panel-shaped vacuum insulation element.

12. The foil-wrapped vacuum insulation element according to one of the preceding Claims, **characterized in that** the paperboard box (11) has at least one ventilation opening which allows the contained air to escape when the core material is filled in and/or when the paperboard box (11) is compressed or evacuated, wherein preferably a ventilation opening is formed by one or more perforations, in particular by one or more needlings.

13. The foil-wrapped vacuum insulation element according to one of the preceding Claims, **characterized in that** the paperboard box (11) has at least one valve or at least one valve area, wherein in the area of a valve, perforations or needlings are provided in all paper layers, but are offset with respect to one another.

14. The foil-wrapped vacuum insulation element according to one of the preceding claims, **characterized in that** the core material is made of and/or pressed from porous powder and/or a fibrous material.

15. The foil-wrapped vacuum insulation element according to one of the preceding claims, **characterized in that** the shell includes a metal foil, in particular an aluminum foil, and/or a metallized foil, in particular a high-barrier foil.

## Revendications

1. Corps d'isolation sous vide entouré d'une feuille, comportant une partie centrale et une enveloppe étanche à l'air entourant la partie centrale, en ce qu'une ou plusieurs couches intermédiaires de papier, de carton et/ou de carton-pâte est/sont placée(s) entre la partie centrale et l'enveloppe qui entoure/entourent complètement la partie centrale et de préférence de manière étanche à la poussière, **caractérisé en ce que** les couches intermédiaires sont pliées en une boîte en carton (11) ouverte et/ou pouvant être fermée, approximativement de même conception que le corps d'isolation sous vide fini.

2. Corps d'isolation sous vide entouré d'une feuille selon la revendication 1, **caractérisé en ce qu'**une couche individuelle de papier ou de carton
a) présente un grammage de 40 g/m² ou plus, par exemple de 50 g/m² ou plus, de préférence de 60 g/m² ou plus, en particulier de 80 g/m² ou plus, ou voire de 100 g/m² ou plus ; et/ou
b) présente un grammage de 250 g/m² ou moins, par exemple de 225 g/m² ou moins, de préférence de 200 g/m² ou moins, en particulier de 175 g/m² ou moins, ou voire de 150 g/m² ou moins.

3. Corps d'isolation sous vide entouré d'une feuille selon l'une des revendications 1 ou 2, **caractérisé en ce que** plusieurs couches de papier et/ou de carton sont prévues, de préférence trois.

4. Corps d'isolation sous vide entouré d'une feuille selon l'une des revendications précédentes, **caractérisé en ce qu'**au moins une couche de papier est reliée à une ou deux couches de papier adjacentes en une couche unique, de préférence collée.

5. Corps d'isolation sous vide entouré d'une feuille selon l'une des revendications précédentes, **caractérisé en ce qu'**au moins l'une de plusieurs couches de papier ou de carton, de préférence une couche de papier ou de carton intérieure, suit un tracé ondulé.

6. Corps d'isolation sous vide entouré d'une feuille selon l'une des revendications 3 à 5, **caractérisé en ce que** 3 couches de papier au total d'un grammage de respectivement 40 g/m² ou plus sont prévues, et/ou d'un grammage de respectivement 250 g/m² ou moins, de sorte que la couche totale constituée de couches reliées entre elles de papier ou de carton présente au total un grammage entre 120 g/m² et 750 g/m², de préférence un grammage entre 150 g/m² et 600 g/m², en particulier un grammage entre 170 g/m² et 500 g/m².

7. Corps d'isolation sous vide entouré d'une feuille selon l'une des revendications précédentes, **caractérisé en ce que** le papier est constitué de 40% en poids ou plus de vieux papiers, de préférence de 60% en poids ou plus de vieux papiers, en particulier de 80% en poids ou plus de vieux papiers.

8. Corps d'isolation sous vide entouré d'une feuille selon l'une des revendications précédentes, **caractérisé en ce que** le corps creux ouvert et/ou pouvant être fermé est réalisé à partir d'une coupe de carton ou de carton-pâte unique.

9. Corps d'isolation sous vide entouré d'une feuille selon l'une des revendications précédentes, **caractérisé en ce que** la boîte en carton (11) comporte au moins une ouverture de remplissage qui est fermée après remplissage de la matière centrale.

10. Corps d'isolation sous vide entouré d'une feuille selon la revendication 9, **caractérisé en ce que** l'orifice de remplissage de la boîte en carton (11) après remplissage de la matière centrale est fermé au moyen d'un couvercle (20), par exemple en plaçant un couvercle amovible ou en rabattant un couvercle (20) suspendu d'un côté sur le corps (17).

11. Corps d'isolation sous vide entouré d'une feuille selon la revendication 10, **caractérisé en ce que** le couvercle (20) à l'état fermé recouvre une surface de base ou une surface principale d'un corps d'isolation sous vide en forme de plaque.

12. Corps d'isolation sous vide entouré d'une feuille selon l'une des revendications précédentes, **caractérisé en ce que** la boîte en carton (11) comporte au moins un orifice d'échappement qui permet lors du remplissage de la matière centrale et/ou en pressant ou évacuant la boîte en carton (11) un échappement de l'air contenu, **en ce que** de préférence un orifice d'échappement est formé par une ou plusieurs perforations, en particulier par un ou plusieurs aiguilletages.

13. Corps d'isolation sous vide entouré d'une feuille selon l'une des revendications précédentes, **caractérisé en ce que** la boîte en carton (11) comporte au moins une valve ou au moins une zone de valve, **en ce que** de préférence dans la zone d'une valve des perforations ou aiguilletages sont prévus dans toutes les couches de papier, toutefois en décalage mutuel.

14. Corps d'isolation sous vide entouré d'une feuille selon l'une des revendications précédentes, **caractérisé en ce que** la matière centrale est constituée de et/ou pressée avec une poudre poreuse et/ou une matière fibreuse.

15. Corps d'isolation sous vide entouré d'une feuille selon l'une des revendications précédentes, **caractérisé en ce que** l'enveloppe comporte une feuille métallique, en particulier une feuille d'aluminium, et/ou une feuille métallisée, en particulier une feuille haute barrière.
